(19) Europäisches Patentamt
European Patent Office
Office européen des brevets

(11) EP 4 321 338 A1

(12) # EUROPEAN PATENT APPLICATION
published in accordance with Art. 153(4) EPC

(43) Date of publication:
**14.02.2024 Bulletin 2024/07**

(21) Application number: **22784371.1**

(22) Date of filing: **28.02.2022**

(51) International Patent Classification (IPC):
***B32B 27/36*** *(2006.01)* ***B42D 25/23*** *(2014.01)*
***B42D 25/24*** *(2014.01)*

(52) Cooperative Patent Classification (CPC):
**B32B 27/36; B42D 25/23; B42D 25/24**

(86) International application number:
**PCT/JP2022/008398**

(87) International publication number:
**WO 2022/215386 (13.10.2022 Gazette 2022/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.04.2021 JP 2021065882**

(71) Applicant: **Mitsubishi Chemical Corporation**
**Chiyoda-ku**
**Tokyo 100-8251 (JP)**

(72) Inventor: **HATTA, Masahiro**
**Tokyo 100-8251 (JP)**

(74) Representative: **Hoffmann Eitle**
**Patent- und Rechtsanwälte PartmbB**
**Arabellastraße 30**
**81925 München (DE)**

(54) **LAMINATE BODY, CARD, PASSPORT, AND MANUFACTURING METHOD OF THESE**

(57) The laminate includes a resin layer (a) containing a polycarbonate resin (A) containing a structural unit (A1) derived from a dihydroxy compound having a moiety represented by the following formula (1) in a part of the structure thereof, and a resin layer (b) containing a polycarbonate resin (B) other than the polycarbonate resin (A) contained in the resin layer (a), and a laser color developer:

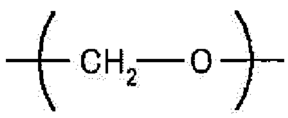
(1)

EP 4 321 338 A1

## Description

### Technical Field

The present invention relates to a laminate, a card, and a passport, and for example, relates to a laminate capable of being applied to laser marking, and a card and a passport including the laminate.

### Background Art

Cards, such as a credit card, a bank card, an ID card, a tag card, and a health insurance certificate, are produced in such a manner that multiple sheets for a card are stacked and fusion bonded among the sheets under heating with a vacuum press machine, and then punched into a card form with a punching machine. A passport is also produced similarly by a step of heat fusion bonding stacked multiple sheets for a card, and other steps.
The cards and passport may be marked with a letter, a bar cord, and the like, through irradiation with laser. For example, an identification number or a lot number of the card, personal information, a face photograph, and the like may be written on the card with YAG laser or the like. By writing the information on the card or the passport with laser or the like as mentioned above, the personal information can be prevented from being disappeared by wear or with the lapse of time. The marking with laser can be performed by a simple process, providing a high industrial value, and thus is receiving attention.
Known sheets used for laser marking include a multilayer sheet having a core layer containing a laser color developer, and skin layers provided on both surfaces of the core layer. PTL 1 describes the multilayer sheet of this type, which includes transparent resin layers containing an amorphous aromatic polyester resin as a major component as the skin layers, and a transparent resin layer containing a polycarbonate resin as a major component as the core layer.
PTL 2 describes a multilayer sheet including transparent resin layers containing a polycarbonate resin as a major component as all the core layer and the skin layers, in which the polycarbonate resin used is specifically a bisphenol A polycarbonate.

### Citation List

### Patent Literatures

PTL 1: JP 2013-001087 A
PTL 2: JP 2010-194757 A

### Summary of Invention

### Technical Problem

The sheet for laser marking applied to a card and a passport is used under various conditions for a prolonged period of time and is subjected to various processes, and therefore the sheet is demanded to have heat resistance, scratch resistance, hydrolysis resistance, and the like. Furthermore, an adhesive is required in the case where the sheet has poor fusion bondability to another sheet, and the sheet is demanded to have solvent resistance since the sheet is brought into contact with an ink in the case where the sheet has an image receiving layer used for printing a face photograph or the like, or in the case where the sheet is subjected to printing for design or security. Moreover, the sheet may be demanded to have low temperature fusion bondability enabling fusion bonding at a low temperature in the production of a card or a passport through fusion bonding of multiple sheets for a card.
However, the multilayer sheet described in PTL 1 has good low temperature fusion bondability due to the skin layer thereof containing an amorphous aromatic polyester resin as a major component, but is insufficient in heat resistance and scratch resistance. Furthermore, the amorphous aromatic polyester resin of the skin layer and the polycarbonate resin of the core layer undergo ester exchange reaction or hydrolysis in each of the layers under high temperature and high humidity condition, resulting in insufficient hydrolysis resistance in some cases.
The use of the multilayer sheet including a skin layer containing a bisphenol-based polycarbonate as a major component as described in PTL 2 can provide good heat resistance, but is insufficient in low temperature fusion bondability and scratch resistance. Furthermore, the insufficient solvent resistance thereof causes failures, such as cracks or whitening occurring due to impregnation with a solvent.
Consequently, it is difficult that the ordinary multilayer sheets having been used for laser marking are improved

in scratch resistance, hydrolysis resistance, solvent resistance, and low temperature fusion bondability in a well balanced manner.

Under the circumstances, a problem to be solved by the present invention is to provide a laminate that is improved in heat resistance, scratch resistance, hydrolysis resistance, solvent resistance, and low temperature fusion bondability, in a well balanced manner.

Solution to Problem

As a result of the earnest investigations by the present inventors, it has been found that the problem can be solved by the use of particular polycarbonate resins in each of the layers of the laminate used as a sheet for laser marking, and thus the present invention has been completed. Specifically, the present invention provides the following items [1] to [24].

[1] A laminate including

a resin layer (a) containing a polycarbonate resin (A) containing a structural unit (A1) derived from a dihydroxy compound having a moiety represented by the following formula (1) in a part of the structure thereof, and
a resin layer (b) containing a polycarbonate resin (B) other than the polycarbonate resin (A) contained in the resin layer (a), and a laser color developer:

$$-\left(CH_2-O\right)- \quad (1)$$

provided that a case where the moiety represented by the formula (1) is a part of $-CH_2-O-H$ is excluded.

[2] The laminate according to the item [1], wherein the polycarbonate resin (A) contains the structural unit (A1) in an amount of 30% by mol or more in structural units derived from the dihydroxy compound.
[3] The laminate according to the item [1] or [2], wherein the polycarbonate resin (A) contains the structural unit (A1) in an amount of 75% by mol or less in structural units derived from the dihydroxy compound.
[4] The laminate according to any one of the items [1] to [3], wherein the resin layer (b) has a content of the laser color developer per unit area of 0.5 $\mu g/cm^2$ or more.
[5] The laminate according to any one of the items [1] to [4], wherein the resin layer (b) has a content of the laser color developer per unit area of 350 $\mu g/cm^2$ or less.
[6] The laminate according to any one of the items [1] to [5], wherein the laser color developer is a metal oxide.
[7] The laminate according to the item [6], wherein the metal oxide is a bismuth-based metal oxide.
[8] The laminate according to any one of the items [1] to [7], wherein the resin layer (a) has a thickness of 5 $\mu m$ or more.
[9] The laminate according to any one of the items [1] to [8], wherein the laminate further includes a sublimation thermal transfer image receiving layer (c) on at least one surface thereof.
[10] The laminate according to any one of the items [1] to [9], wherein at least one surface of the laminate has a kurtosis (Rku) of 3.0 or less.
[11] The laminate according to any one of the items [1] to [10], wherein at least one surface of the laminate has a maximum height roughness (Rz) of 1 $\mu m$ or more and 20 $\mu m$ or less.
[12] The laminate according to any one of the items [1] to [11], wherein at least one surface of the laminate has an arithmetic average roughness (Ra) of 0.1 $\mu m$ or more and 5 $\mu m$ or less.
[13] The laminate according to any one of the items [1] to [12], wherein the laminate is used as a card.
[14] The laminate according to any one of the items [1] to [12], wherein the laminate is used as a passport.
[15] A card including the laminate according to any one of the items [1] to [12].
[16] A passport including the laminate according to any one of the items [1] to [12].
[17] A method including using the laminate according to any one of the items [1] to [12] as a card or a passport.
[18] The method according to the item [17], wherein the method includes laser marking the laminate.
[19] Use of the laminate according to any one of the items [1] to [12] as a card or a passport.
[20] The use according to the item [19], wherein the use includes laser marking the laminate.
[21] A laminate including

a resin layer (a) containing a polycarbonate resin (A) containing a structural unit (A1) derived from a dihydroxy

compound having a moiety represented by the following formula (1) in a part of the structure thereof, and
a resin layer (b) containing a resin (B1) other than the polycarbonate resin (A) contained in the resin layer (a), and a laser color developer,
having an area of 400 $cm^2$ or less:

$$-\left( CH_2-O \right)- \quad (1)$$

provided that a case where the moiety represented by the formula (1) is a part of $-CH_2-O-H$ is excluded.

[22] A method of producing a laminate including at least laminating

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer, so as to provide a laminate:

$$-\left( CH_2-O \right)- \quad (1)$$

provided that a case where the moiety represented by the formula (1) is a part of $-CH_2-O-H$ is excluded.

[23] A method of producing a card including a laminate including

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer,
the method of producing a card, at least including a step of stacking and fusion bonding the laminate and another film, and a step of laser marking through laser irradiation:

$$-\left( CH_2-O \right)- \quad (1)$$

provided that a case where the moiety represented by the formula (1) is a part of $-CH_2-O-H$ is excluded.

[24] A method of producing a passport including a laminate including

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer,
the method of producing a passport, at least including a step of laminating and fusion bonding the laminate and another film, and a step of laser marking through laser irradiation:

$$-\left( CH_2-O \right)- \quad (1)$$

provided that a case where the moiety represented by the formula (1) is a part of $-CH_2-O-H$ is excluded.

Advantageous Effects of Invention

The laminate of the present invention can be improved in heat resistance, scratch resistance, hydrolysis resistance, solvent resistance, and low temperature fusion bondability, in a well balanced manner.

Brief Description of Drawings

Fig. 1 is a schematic illustration showing a layer configuration of a card.
Fig. 2 is a schematic illustration showing a layer configuration of a passport.

Description of Embodiments

The present invention will be described in detail with reference to embodiments below. However, the present invention is not limited to the embodiments described below. In the following description, the term "film" and the term "sheet" are not clearly distinguished from each other, in which an item referred to as a "film" may include a "sheet", and an item referred to as a "sheet" may include a "film".

<Laminate>

The laminate of the present invention is a laminate including at least two layers, i.e., a resin layer (a) and a resin layer (b). The resin layer (a) and the resin layer (b) will be described in detail below.

[Resin Layer (a)]

The resin layer (a) contains a polycarbonate resin (A) containing a structural unit derived from a dihydroxy compound having a moiety represented by the following formula (1) in a part of the structure thereof (which may be referred to as a structural unit (A1)).

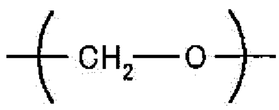

(1)

The case where the moiety represented by the formula (1) is a part of $-CH_2-O-H$ is excluded. Accordingly, the dihydroxy compound has at least two hydroxy groups and further has a moiety represented by the formula (1).

In the present invention, as described later, a polycarbonate resin (B) other than the polycarbonate resin (A) contained in the resin layer (a) is used in the resin layer (b), and the polycarbonate resin (A) having the structure described above is used in the resin layer (a), resulting in the improvement in heat resistance, scratch resistance, hydrolysis resistance, solvent resistance, and low temperature fusion bondability, in a well balanced manner.

The polycarbonate resin (A) having the aforementioned structure can be produced with a plant-derived material and thus can reduce the environmental load.

The dihydroxy compound having a moiety represented by the formula (1) in a part of the structure thereof is not particularly limited, as far as having a structure represented by the formula (1) in the molecule, and specific examples thereof include a compound having an aromatic group on the side chain and an ether group bonded to the aromatic group on the main chain, such as 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-isopropylphenyl)fluorene, 9,9-bis(4-(2-hydroxyethoxy)-3-isobutylphenyl)fluorene, 9,9-bis(4-(2-hydroxyethoxy)-3-tert-butylphenyl)fluorene, 9,9-bis(4-(2-hydroxyethoxy)-3-cyclohexylphenyl)fluorene, 9,9-bis(4-(2-hydroxyethoxy)-3-phenylphenyl)fluorene, 9,9-bis(4-(2-hydroxyethoxy)-3,5-dimethylphenyl)fluorene, 9,9-bis(4-(2-hydroxyethoxy)-3-tert-butyl-6-methylphenyl)fluorene, and 9,9-bis(4-(3-hydroxy-2,2-dimethylpropoxy)phenyl)fluorene, and a dihydroxy compound having a cyclic ether structure, exemplified by a dihydroxy compound represented by the following formula (2) and a spiroglycol represented by the following formula (3).

Among the above, a dihydroxy compound having a cyclic ether structure is preferred, and an anhydrosugar alcohol represented by the formula (2) is particularly preferred. More specifically, examples of the dihydroxy compound represented by the formula (2) include isosorbide, isomannide, and isoidide, which are in a stereoisomeric relationship.

Examples of the dihydroxy compound represented by the formula (3) include 3,9-bis(1,1-dimethyl-2-hydroxyethyl)-2,4,8,10-tetraoxaspiro(5.5)undecane (trivial name: spiroglycol), 3,9-bis(1,1-diethyl-2-hydroxyethyl)-2,4,8,10-tetraoxaspiro(5.5)undecane, and 3,9-bis(1,1-dipropyl-2-hydroxyethyl)-2,4,8,10-tetraoxaspiro(5.5)undecane.

These compounds may be used alone, or two or more kinds thereof may be used in combination.

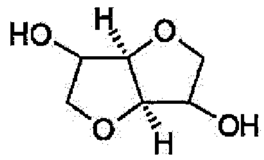

(2)

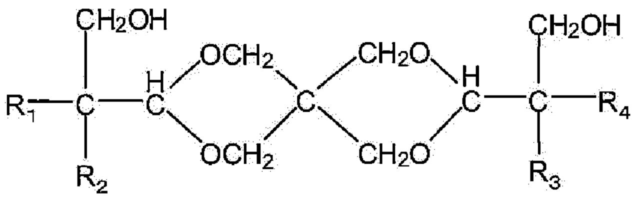

(3)

In the formula (3), $R_1$ to $R_4$ each independently represent an alkyl group having 1 to 3 carbon atoms.

The dihydroxy compound represented by the formula (2) is an ether diol that can be produced from a glucide with a plant-derived substance as a raw material. In particular, isosorbide can be produced at low cost in such a manner that D-glucose obtained from starch is hydrogenated and then dehydrated, and is abundantly available as a resource. In this circumstance, isosorbide is most preferably used.

The polycarbonate resin (A) may further contain a structural unit other than the structural unit (A1), as a structural unit derived from a dihydroxy compound, and for example, preferably contains a structural unit derived from at least one kind of a dihydroxy compound selected from an aliphatic dihydroxy compound and an alicyclic dihydroxy compound (which may be hereinafter referred to as a "structural unit (A2)").

The aliphatic dihydroxy compound is not particularly limited in number of carbon atoms thereof, and examples thereof include an aliphatic dihydroxy compound having approximately 2 to 12 carbon atoms, and preferably 2 to 6 carbon atoms. Specific examples thereof include ethylene glycol, 1,3-propanediol, 1,4-butanediol, 1,5-pentanediol, neopentyl glycol, 1,6-hexanediol, 1,7-heptanediol, 1,8-octainediol, 1,9-nonanediol, 2-ethyl-1,6-hexanediol, 2,2,4-trimethyl-1,6-hexanediol, 1,10-decanediol, 1,12-dodecanediol, hydrogenated dilinoleyl glycol, and hydrogenated dioleyl glycol. Preferred examples thereof include at least one kind selected from ethylene glycol, 1,3-propanediol, 1,4-butanediol, 1,5-pentanediol, 1,6-hexanediol, 1,9-nonanediol, 1,10-decanediol, and 1,12-dodecanediol, and more preferred examples thereof include at least one kind selected from ethylene glycol, 1,3-propanediol, 1,4-butanediol, 1,5-pentanediol, and 1,6-hexanediol. Examples of the structural unit derived from the aliphatic dihydroxy compound used also include the structural units described in WO 2004/111106.

The structural unit derived from the alicyclic dihydroxy compound preferably contains at least any of a 5-membered structure and a 6-membered structure, and in particular, the 6-membered structure may be fixed to a chair conformation or a boat conformation by a covalent bond. The structural unit derived from the alicyclic dihydroxy compound having the structure contained can enhance the heat resistance of the resulting polycarbonate resin (A).

The number of carbon atoms contained in the alicyclic dihydroxy compound is, for example, 5 to 70, preferably 6 to 50, and more preferably 8 to 30.

Preferred examples of the alicyclic dihydroxy compound include at least one kind selected from cyclohexanedimethanol, tricyclodecanedimethanol, adamantanediol, and pentacyclopentadecanedimethanol, and from the standpoint of the economic efficiency and the heat resistance, cyclohexanedimethanol or tricyclodecanedimethanol is more preferred, and cyclohexanedimethanol is further preferred. Cyclohexanedimethanol is particularly preferably 1,4-cyclohexanedimethanol due to the good industrial availability thereof.

Examples of the structural unit derived from the alicyclic dihydroxy compound used also include the structural units described in WO 2007/148604.

The content ratio of the structural unit (A1) in the polycarbonate resin (A) is preferably 30% by mol or more, more preferably 40% by mol or more, and further preferably 45% by mol or more, and is preferably 75% by mol or less, more preferably 70% by mol or less, and further preferably 65% by mol or less, in the structural units derived from the dihydroxy compound. In the case where the content ratio is in the range, the coloration caused by the carbonate structure, the coloration caused by the impurities contained in a slight amount due to the use of the plant-derived substance, and the like can be effectively suppressed, and the transparency of the laminate can be easily enhanced. Furthermore, there

is a tendency of achieving the well balanced suitable properties including the moldability, the mechanical strength, the heat resistance, and the like, which is difficult to achieve with a polycarbonate resin constituted only by the structural unit (A1).

The content ratio of the structural unit (A2) in the polycarbonate resin (A) is preferably 25% by mol or more, more preferably 30% by mol or more, and further preferably 35% by mol or more, and is preferably 70% by mol or less, more preferably 60% by mol or less, and further preferably 55% by mol or less, in the structural units derived from the dihydroxy compound.

The structural units derived from the dihydroxy compound of the polycarbonate resin (A) are preferably formed only of the structural unit (A1) and the structural unit (A2), and may contain a structural unit derived from another dihydroxy compound without impairing the obj ect of the present invention. Specific examples thereof include an aromatic ring-containing dihydroxy compound exemplified by 2,2-bis(4-hydroxyphenyl)propane (trivial name: bisphenol A) that may be copolymerized in a small amount. With the use of an aromatic ring-containing dihydroxy compound contained, the efficient improvement in heat resistance and moldability, but a large amount thereof contained provides a tendency of deteriorating the weather resistance, and therefore the compound is preferably used in such an amount that does not impair the weather resistance.

Examples of the aromatic ring-containing dihydroxy compound other than bisphenol A include α,α'-bis(4-hydroxyphenyl)-m-diisopropylbenzene (bisphenol M), 9,9-bis(4-hydroxy-3-methylphenyl)fluorene, 1,1-bis(4-hydroxyphenyl)cyclohexane, 1,1-bis(4-hydroxyphenyl)-3,3,5-trimethylcyclohexane, 4,4'-dihydroxy-3,3'-dimethyldiphenylsulfide, 2,2-bis(4-hydroxy-3-methylphenyl)propane (bisphenol C), 2,2-bis(4-hydroxyphenyl)-1,1,1,3,3,3-hexafluoropropane (bisphenol AF), and 1,1-bis(4-hydroxyphenyl)decane.

The glass transition temperature of the polycarbonate resin (A) is, for example, 70°C or more, preferably 80°C or more, and more preferably 90°C or more, and is, for example, 155°C or less, preferably 130°C or less, and more preferably 120°C or less. The polycarbonate resin (A) generally preferably has a single glass transition temperature.

In the case where the glass transition temperature is in the range, there is a tendency that the low temperature fusion bondability can be easily achieved, and furthermore, the heat resistance can be easily imparted to the laminate. The glass transition temperature can be regulated by appropriately selecting the ratio of the structural units constituting the polycarbonate resin (A). The glass transition temperatures of the resins (A) and (B) can be obtained through the measurement of the temperature dispersion of the dynamic viscoelasticity with a viscoelastic spectrometer. The detailed measurement condition may be in accordance with the description in the examples.

The polycarbonate resin (A) can be produced by a polymerization method that has been ordinarily performed, and may be produced by any of a phosgene method or an ester exchange method of reacting with a carbonate diester. Among these, an ester exchange method in which a dihydroxy compound having a moiety represented by the formula (1) in a part of the structure thereof and another dihydroxy compound are reacted with a carbonate diester in the presence of a polymerization catalyst is preferred. The ester exchange method is a polymerization method of performing ester exchange reaction by mixing the dihydroxy compounds with a carbonate diester, a basic catalyst, and an acidic substance neutralizing the catalyst.

Examples of the carbonate diester include diphenyl carbonate, ditolyl carbonate, bis(chlorophenyl) carbonate, m-cresyl carbonate, dinaphthyl carbonate, bis(biphenyl) carbonate, diethyl carbonate, dimethyl carbonate, dibutyl carbonate, and dicyclohexyl carbonate, and among these, diphenyl carbonate is preferably used.

The molecular weight of the polycarbonate resin (A) can be shown by the reduced viscosity, which is, for example, 0.3 dL/g or more, and preferably 0.35 dL/g or more, from the standpoint of the achievement of the mechanical strength, and is, for example, 1.2 dL/g or less, preferably 1 dL/g or less, and more preferably 0.8 dL/g or less, from the standpoint of the enhancement of the flowability in molding, resulting in the enhancement of the productivity and the moldability.

The reduced viscosity may be measured in such a manner that a polycarbonate resin concentration is precisely regulated to 0.6 g/dL with dichloromethane as a solvent, and the reduced viscosity is measured with an Ubbelohde viscosity tube at a temperature of 20.0°C ±0.1°C.

The resin layer (a) may use only the polycarbonate resin (A) as a resin, and may contain a resin other than the polycarbonate resin (A) in such a range that does not deviate from the substance of the present invention. The resin used may be a known versatile resin, and is preferably a resin that has compatibility with the polycarbonate resin (A). The use of a resin having the compatibility can provide a tendency that the transparency of the laminate can be prevented from being lowered.

The resin constituting the resin layer (a) may contain the polycarbonate resin (A) as a major component, and the amount of the polycarbonate resin (A) is, for example, 50% by mass or more, preferably 70% by mass or more, more preferably 90% by mass or more, and most preferably 100% by mass, based on the total amount of the resin contained in the resin layer (a).

The resin layer (a) may optionally contain a colorant, such as a coloring pigment and a dye. The content of the colorant is not particularly limited, and is preferably such an amount that does not impair the visibility from the standpoint

of the improvement of the contrast in printing.

[Resin Layer (b)]

The resin layer (b) contains a polycarbonate resin other than the polycarbonate resin (A) contained in the resin layer (a) (which may be hereinafter referred to as a polycarbonate resin (B)), and a laser color developer.

The laminate of the present invention can be used as a sheet for laser marking that is colored through irradiation with laser since the resin layer (b) containing a laser color developer is included therein. The use of the polycarbonate resin (B) in the resin layer (b) can provide excellent laser color developability while improving the heat resistance, the mechanical strength, and the like of the laminate.

It suffices that the polycarbonate resin (B) used may be a polycarbonate resin other than the polycarbonate resin (A) having the structural unit (A1), and a bisphenol-based polycarbonate is preferably used. The use of a bisphenol-based polycarbonate can facilitate the improvement of the various mechanical characteristics, the heat resistance, the laser color developability, and the like.

The bisphenol-based polycarbonate contains a structural unit derived from a bisphenol in an amount of 50% by mol or more, preferably 70% by mol or more, and more preferably 90% by mol or more, in the structural units derived from the dihydroxy compound. The bisphenol-based polycarbonate may be either a homopolymer or a copolymer. The bisphenol-based polycarbonate may have a branched structure, or may be a linear structure, and may also be a mixture of a resin having a branched structure and a resin having only a linear structure.

Specific examples of the bisphenol include 2,2-bis(4-hydroxyphenyl)propane (bisphenol A), 1,1-bis(4-hydroxyphenyl)-1-phenylethane (bisphenol AP), 2,2-bis(4-hydroxyphenyl)hexafluoropropane (bisphenol AF), 2,2-bis(4-hydroxyphenyl)butane (bisphenol B), bis(4-hydroxyphenyl)diphenylmethane (bisphenol BP), 2,2-bis(3-methyl-4-hydroxyphenyl)propane (bisphenol C), 1,1-bis(4-hydroxyphenyl)ethane (bisphenol E), bis(4-hydroxyphenyl)methane (bisphenol F), 2,2-bis(4-hydroxy-3-isopropylphenyl)propane (bisphenol G), 1,3-bis(2-(4-hydroxyphenyl)-2-propyl)benzene (bisphenol M), bis(4-hydroxyphenyl)sulfone (bisphenol S), 1,4-bis(2-(4-hydroxyphenyl)-2-propyl)benzene (bisphenol P), 5,5'-(1-methylethylidene)-bis[1,1'-(bisphenyl)-2-ol]propane (bisphenol PH), 1,1-bis(4-hydroxyphenyl)-3,3,5-trimethylcyclohexane (bisphenol TMC), and 1,1-bis(4-hydroxyphenyl)cyclohexane (bisphenol Z). One kind of the bisphenol may be used alone, or two or more kinds thereof may be used in combination.

The bisphenol used is preferably 2,2-bis(4-hydroxyphenyl)propane, i.e., bisphenol A, and a part of bisphenol A may be replaced by another bisphenol.

The content of the structural unit derived from bisphenol A is preferably 50% by mol or more, more preferably 70% by mol or more, further preferably 90% by mol or more, and most preferably 100% by mol, in the structural units derived from the dihydroxy compound. Accordingly, the polycarbonate resin (B) is most preferably a bisphenol A homopolycarbonate.

The production method of the bisphenol-based polycarbonate used as the polycarbonate resin (B) may be any known method, such as a phosgene method, an ester exchange method, and a pyridine method.

For example, the ester exchange method is a production method in which a basic catalyst and an acidic substance neutralizing the basic catalyst are added to the bisphenol and a carbonate diester, and melt ester exchange polycondensation is performed. Specific examples of the carbonate diester have been described for the polycarbonate resin (A) above, and diphenyl carbonate is particularly preferably used.

The mass average molecular weight of the bisphenol-based polycarbonate used in the present invention is generally 10,000 or more, and preferably 30,000 or more, and is generally 100,000 or less, and preferably 80,000 or less, from the standpoint of the balance among the mechanical characteristics and the moldability.

The mass average molecular weight can be measured by gel permeation chromatography (GPC) using polystyrene as the standard substance.

The viscosity average molecular weight of the bisphenol-based polycarbonate is generally 12,000 or more, preferably 15,000 or more, more preferably 20,000 or more, and further preferably 22,000 or more, and is generally 40,000 or less, preferably 35,000 or less, more preferably 30,000 or less, and further preferably 28,000 or less, from the standpoint of the balance among the mechanical characteristics and the moldability. The viscosity average molecular weight may be measured in such a manner that the limiting viscosity ([$\eta$]) (unit: dl/g) at a temperature of 20°C is measured with an Ubbelohde viscometer using dichloromethane as a solvent, and the viscosity average molecular weight is calculated from the Schnell viscosity formula: $\eta = 1.23 \times 10^{-4} M^{0.83}$.

The glass transition temperature of the polycarbonate resin (B) is preferably higher than the glass transition temperature of the polycarbonate resin (A), and is, for example, 110°C or more and 200°C or less. The glass transition temperature thereof is preferably 125°C or more, more preferably 135°C or more, and further preferably 140°C or more, and is preferably 175°C or less, more preferably 170°C or less, and further preferably 165°C or less. The polycarbonate resin (B) generally has a single glass transition temperature. In the case where the glass transition temperature is the upper limit value or more, the sheet can have appropriate heat resistance, can be prevented from being foamed in

irradiation with high power laser light, and can be improved in laser printability and appearance. In the case where the glass transition temperature is the upper limit value or less, the moldability and the like can be improved.

(Laser Color Developer)

The laser color developer contained in the resin layer (b) is not particularly limited, as far as having a function of generating heat through irradiation with laser light, and may be either a so-called self-coloring type color developer that colors by itself through irradiation with laser light, or a material that does not color by itself. The generation of heat by the laser color developer allows at least the material surrounding the laser color developer to be carbonized to achieve the target print on the resin layer (b). In the case where a self-coloring type laser color developer is used, the coloration of the laser color developer and the coloration of the carbide formed through carbonization of the material of the laminate are combined with each other to achieve printing in high density and excellent visibility. In the case where the laser color developer is colored, the color tone thereof is not particularly limited, and the laser color developer capable of coloring in dark color, such as black, dark blue, and brown, is preferably used from the standpoint of the visibility.
The laser color developer may be either a metal oxide or a compound other than a metal oxide. The metal oxide is not particularly limited, as far as having a laser color developability, and examples thereof include iron oxide, copper oxide, zinc oxide, tin oxide, cobalt oxide, nickel oxide, bismuth oxide, indium oxide, antimony oxide, tungsten oxide, neodymium oxide, mica, hydrotalcite, montmorillonite, and smectite.
Examples of the laser color developer other than the metal oxide include a metal, such as iron, copper, zinc, tin, gold, silver, cobalt, nickel, bismuth, antimony, and aluminum, and a salt thereof, i.e., a metal salt, such as iron chloride, iron nitrate, iron phosphate, copper chloride, copper nitrate, copper phosphate, zinc chloride, zinc nitrate, zinc phosphate, nickel chloride, nickel nitrate, bismuth subcarbonate, and bismuth nitrate. A metal hydroxide, such as magnesium hydroxide, lanthanum hydroxide, nickel hydroxide, and bismuth hydroxide, and a metal boride, such as zirconium boride, titanium boride, and lanthanum boride, may also be used. In the metal boride, a hexaboride has a near infrared ray absorbability, and in particular, lanthanum hexaboride is preferred due to the excellent absorption efficiency of laser light thereof. A dye-based material, exemplified by a leuco dye, such as a fluoran-based dye, a phenothiazine-based dye, a spiropyran-based dye, a triphenyl metaphthalide-based dye, and a rhodamine lactam-based dye, and carbon black may also be used.
One kind of the laser color developer may be used alone, or two or more kinds thereof may be used in combination.
The laser color developer used in the resin layer (b) is preferably a metal oxide from the standpoint of the laser printability. In particular, a bismuth-based metal oxide, such as bismuth oxide and a metal oxide containing bismuth and at least one kind of a metal selected from Zn, Ti, Al, Zr, Sr, Nd, and Nb, is preferably used, and bismuth oxide is more preferably used. Bismuth oxide can color with a relatively small amount thereof, and thus can provide excellent laser color developability while preventing the transparency of the resin layer (b) from being impaired.
The average particle diameter of the laser color developer is preferably 10 μm or less, more preferably 5 μm or less, further preferably 3 μm or less, and particularly preferably 2 μm or less. In the case where the particle diameter is 10 μm or less, there is no concern of largely decreasing the transparency. The particle diameter herein means the median diameter (d50) obtained by the laser diffraction-scattering method. The lower limit of the average particle diameter of the laser color developer is not particularly limited, and is preferably 0.05 μm or more, more preferably 0.1 μm or more, and further preferably 0.3 μm or more, from the standpoint of the printing capability and the productivity.
Examples of the commercially available product of the metal oxide include "42-903A" and "42-920A", trade names, available from Tomatec Co., Ltd., and "Iriotec 8820" and "Iriotec 8825", trade names, available from Merk Performance Materials Ltd.
In the case where the metal oxide is used as the laser color developer, only the metal oxide may be used, or the metal oxide and a compound other than the metal oxide may be used in combination.
The content of the laser color developer in the resin layer (b) is preferably 0.5 $\mu g/cm^2$ or more in terms of content per unit area. In the case where the content of the laser color developer is the lower limit or more, the printability can be improved. The content of the laser color developer is more preferably 3 $\mu g/cm^2$ or more, further preferably 7 $\mu g/cm^2$ or more, still further preferably 10 $\mu g/cm^2$ or more, particularly preferably 30 $\mu g/cm^2$ or more, more particularly preferably 50 $\mu g/cm^2$ or more, and most preferably 70 $\mu g/cm^2$ or more, from the standpoint of the printability.
The content of the laser color developer in the resin layer (b) is preferably 350 $\mu g/cm^2$ or less. In the case where the content thereof is the upper limit or less, the transparency and the mechanical properties of the laminate can be improved. The content of the laser color developer is more preferably 320 $\mu g/cm^2$ or less, further preferably 300 $\mu g/cm^2$ or less, particularly preferably 280 $\mu g/cm^2$ or less, and most preferably 260 $\mu g/cm^2$ or less, from these standpoints.
The content of the laser color developer in the resin layer (b) is not particularly limited, and is preferably 0.01 part by mass or more, more preferably 0.03 part by mass or more, and further preferably 0.06 part by mass or more, and is preferably 3 parts by mass or less, more preferably 2 parts by mass or less, further preferably 1 part by mass or

less, and particularly preferably 0.8 part by mass or less, per 100 parts by mass of the resin contained in the resin layer (b).

In the case where the material other than carbon black is used as the laser color developer, the content thereof is as described above, and in the case where carbon black is used as the laser color developer, the content of the carbon black is preferably 0.002 $\mu g/cm^2$ or more, more preferably 0.009 $\mu g/cm^2$ or more, further preferably 0.018 $\mu g/cm^2$ or more, and particularly preferably 0.1 $\mu g/cm^2$ or more, and is preferably 14 $\mu g/cm^2$ or less, more preferably 7 $\mu g/cm^2$ or less, further preferably 1.4 $\mu g/cm^2$ or less, and particularly preferably 0.7 $\mu g/cm^2$ or less.

In the case where carbon black is used as the laser color developer in the resin layer (b), the content thereof is not particularly limited, and is preferably 0.0001 part by mass or more, more preferably 0.0005 part by mass or more, and further preferably 0.001 part by mass or more, and is preferably 0.1 part by mass or less, more preferably 0.05 part by mass or less, further preferably 0.01 part by mass or less, and particularly preferably 0.005 part by mass or less, per 100 parts by mass of the resin contained in the resin layer (b).

The resin layer (b) may contain only the polycarbonate resin (B) as the resin, and may contain a resin other than the polycarbonate resin (B) in such a range that does not deviate from the substance of the present invention. The resin used may be a known versatile resin, and is preferably a resin that has compatibility with the polycarbonate resin (B). The use of a resin having the compatibility can provide a tendency that the transparency of the laminate can be prevented from being lowered.

The resin constituting the resin layer (b) may contain the polycarbonate resin (B) as a major component, and the amount of the polycarbonate resin (B) is, for example, 50% by mass or more, preferably 70% by mass or more, more preferably 90% by mass or more, and most preferably 100% by mass, based on the total amount of the resin contained in the resin layer (b).

The resin layers (a) and (b) each may contain various additives in addition to the components described above, in such a range that does not impair the properties thereof, or for enhancing the properties other than the object of the present invention. Examples of the additives include materials that have been generally used in a wide range of resin materials, such as an antioxidant, a thermal stabilizer, a process stabilizer, an ultraviolet ray absorbent, a light stabilizer, a matting agent, an impact resistance improver, a processing aid, a metal deactivator, a deactivator for remaining polymerization catalyst, an antibacterial and antifungal agent, an antiviral agent, an antistatic agent, a lubricant, a flame retardant, and a filler. These materials may be added in such amounts that have been generally applied depending on the purposes of use thereof.

[Layer Configuration]

In the laminate, the resin layer (a) may be provided on at least one surface of the resin layer (b), and may be provided on both surfaces of the resin layer (b). Therefore, examples of the lamination structure of the resin layer (a) and the resin layer (b) include a two-layer configuration of resin layer (a)/resin layer (b), and a three-layer configuration of resin layer (a)/resin layer (b)/resin layer (a).

The resin layer (a) is preferably provided on both surfaces of the resin layer (b), and therefore, the lamination structure is preferably a layer configuration of resin layer (a)/resin layer (b)/resin layer (a).

The resin layer (a) is provided on at least one surface of the resin layer (b), and thereby imparts the low temperature fusion bondability thereto while protecting the resin layer (b) to improve the scratch resistance, the hydrolysis resistance, the solvent resistance, and the like thereof, and may be provided on both surfaces of the resin layer (b), thereby protecting the resin layer (b) more securely, so as to enhance the scratch resistance, the hydrolysis resistance, the solvent resistance, and the like thereof. The low temperature fusion bondability can be imparted to both the surfaces of the laminate.

The resin layer (a) is preferably laminated directly on the resin layer (b), and another layer, such as an anchor coating layer, may be provided depending on necessity between the resin layer (a) and the resin layer (b). Examples of the functions of the anchor coating layer include a solvent resistance capability, a barrier capability, an adhesion capability, a whitening capability, a hiding capability, a cushioning capability, and an antistatic capability.

[Sublimation Thermal Transfer Image Receiving Layer (c)]

The laminate of the present invention may include a sublimation thermal transfer image receiving layer (c) on at least one surface of the laminate. In the case where a face photograph or the like is clearly printed in full color, the sublimation thermal transfer image receiving layer (c) is used as an image receiving layer therefor. The image receiving layer provided can enhance the affinity of the printing ink and the surface of the laminate, enabling clear printing on the surface of the laminate.

Examples of the layer configuration in the case where the laminate has a sublimation thermal transfer image receiving layer (c) include sublimation thermal transfer image receiving layer (c)/resin layer (a)/resin layer (b), resin layer (a)/resin layer (b)/sublimation thermal transfer image receiving layer (c), sublimation thermal transfer image receiving

layer (c)/resin layer (a)/resin layer (b)/resin layer (a), and sublimation thermal transfer image receiving layer (c)/resin layer (a)/resin layer (b)/resin layer (a)/sublimation thermal transfer image receiving layer (c).

The sublimation thermal transfer image receiving layer (c) used may be a known one. For example, the layer may be constituted by adding various additives, such as a release agent, depending on necessity to a varnish containing a resin, to which a coloring material can be easily transferred or dyed, as a major component.

Examples of the dyeable resin used in the sublimation thermal transfer image receiving layer (c) include a single material or a mixture of a polyolefin resin, such as polypropylene, a halogenated resin, such as polyvinyl chloride and polyvinylidene chloride, a vinyl-based resin, such as polyvinyl acetate and a polyacrylate ester, and copolymers thereof, a polyester-based resin, such as polyethylene terephthalate and polybutylene terephthalate, a polystyrene-based resin, a polyamide-based resin, a copolymer of an olefin such as ethylene and propylene and another vinyl-based monomer, an ionomer, and a cellulose derivative, and among these, a polyester-based resin and a vinyl-based resin are preferred.

The resin described above may be dissolved or dispersed in a solvent, such as an organic solvent or water, and then coated to form the sublimation thermal transfer image receiving layer. The organic solvent is not particularly limited, and methyl ethyl ketone (MEK), methyl isobutyl ketone (MIBK), toluene, ethyl acetate, cyclohexane, acetone, tetrahydrofuran, a mixed solvent thereof, or the like may be used.

The sublimation thermal transfer image receiving layer (c) may further appropriately contain, as an additive, a stabilizer, such as an epoxy compound, an ultraviolet ray absorbent for improving the weather resistance, an anti-foaming agent and a surfactant for improving the coatability, and the like.

The sublimation thermal transfer image receiving layer (c) may contain a release agent for preventing the thermal fusion of the image receiving layer to the thermal transfer sheet in forming an image. The release agent used may be a silicone oil, a phosphate ester-based plasticizer, or a fluorine compound, and among these, a silicone oil is preferred. The amount of the release agent added is preferably 2 parts by mass or more and 30 parts by mass or less per 100 parts by mass of the resin constituting the image receiving layer (c). Instead of the addition and mixing of the release agent to the material of the image receiving layer, a release agent layer may be laminated on the surface of the image receiving layer (c). The image receiving layer (c) may contain other additives, such as a fluorescent whitening agent, depending on necessity.

An anchor coating layer may be appropriately provided between the sublimation thermal transfer image receiving layer (c) and the resin layer (a) or the resin layer (b). Examples of the function of the anchor coating layer include a solvent resistance capability, a barrier capability, an adhesion capability, a whitening capability, a hiding capability, a cushioning capability, and an antistatic capability.

The anchor coating layer may be formed by dispersing a conductive substance having an antistatic capability, such as conductive acicular crystals, in a binder formed of a thermoplastic resin. Examples of the conductive acicular crystals include acicular crystals, such as potassium titanate, titanium oxide, aluminum borate, silicon carbide, and silicon nitride, having a surface treated with a conducting agent. The anchor coating layer having an antistatic capability imparted thereto can prevent a conveying failure, such as double feed, in feeding the laminate of the present invention as a thermal transfer image receiving sheet to a thermal transfer printer.

The sublimation thermal transfer image receiving layer (c) is generally provided on the front surface of the laminate (i.e., the surface becoming the viewing side in laminating in a card or a passport). The sublimation thermal transfer image receiving layer (c) can be formed by coating as a thin film on at least one surface of the laminated structure including the resin layer (a) and the resin layer (b), followed by subjecting to a drying process. The coating method used may be a known method.

The laminate of the present invention preferably has the resin layer (a) that is provided on the surface of the laminate from the standpoint of the improvement in low temperature fusion bondability to another member, such as a sheet. Therefore, examples of the preferred layer configuration of the laminate of the present invention include resin layer (a)/resin layer (b) or resin layer (a)/resin layer (b)/resin layer (a) for the case where the sublimation thermal transfer image receiving layer (c) is not provided. Examples thereof include resin layer (a)/resin layer (b)/sublimation thermal transfer image receiving layer (c) or sublimation thermal transfer image receiving layer (c)/resin layer (a)/resin layer (b)/resin layer (a) for the case where the sublimation thermal transfer image receiving layer (c) is provided.

(Pencil Hardness)

The laminate of the present invention preferably has, on at least one surface thereof, a pencil hardness of 3B or more, more preferably 2B or more, and further preferably B or more. The increase of the pencil hardness of the surface of the laminate of the present invention can enhance the scratch resistance thereof, thereby facilitating the suppression of scratches on the surface and decrease of the transparency in the production of a card or a passport. The laminate preferably has the pencil hardness described above on the surface of the laminate constituted by the resin layer (a).

(Glass Transition Temperature)

The glass transition temperature of the laminate of the present invention is preferably 80°C or more and 150°C or less, more preferably 85°C or more, further preferably 90°C or more, and particularly preferably 95°C or more, and is more preferably 140°C or less, further preferably 130°C or less, and particularly preferably 120°C or less. In the case where the glass transition temperature is in the range, the low temperature fusion bondability can be achieved, and the sufficient heat resistance can be easily imparted to the laminate. The glass transition temperature can be obtained through the measurement of the temperature dispersion of the dynamic viscoelasticity with a viscoelastic spectrometer. The detailed measurement method may be in accordance with the description in the examples.

(Total Light Transmittance)

In the case where the resin layer (a) and the resin layer (b) have transparency, and the laminate has the sublimation thermal transfer image receiving layer (c), it is preferred that the sublimation thermal transfer image receiving layer (c) also has transparency to allow the laminate to have high transparency. Specifically, the total light transmittance according to Old JIS K7105 of the laminate is preferably 84% or more, more preferably 85% or more, further preferably 86% or more, and most preferably 88% or more. The enhancement of the transparency of the laminate can enhance the contrast between the printed part and the other part than the printed part on the resin layer (b). The upper limit of the total light transmittance is preferably as high as possible, i.e., 100%, and may be 99%.

(Layer Thickness)

The thicknesses of the resin layers (a) in the laminate each are preferably 5 μm or more. In the case where the thickness thereof is 5 μm or more, the resin layer (a) can sufficiently exert the function thereof, and can improve the capabilities, such as the scratch resistance, the hydrolysis resistance, the solvent resistance, and the low temperature fusion bondability. The thicknesses of the resin layers (a) each are preferably 6 μm or more, more preferably 8 μm or more, further preferably 11 μm or more, and particularly preferably 14 μm or more. The increase of the thickness generally provides a tendency of decreasing the flexibility of the laminate, but in this laminate, the particular polycarbonate resins (A) and (B) are used in the resin layers (a) and (b), and thereby the flexibility can be prevented from being decreased even though the thickness is relatively increased, for example, after the long-term use under high humidity.

The thicknesses of the resin layers (a) in the laminate each are preferably 50 μm or less. In the case where the thicknesses of the resin layers (a) each are the upper limit value or less, the scratch resistance, the hydrolysis resistance, the solvent resistance, the low temperature fusion bondability, and the like can be improved while preventing the laminate from becoming too thick beyond necessity. The flexibility and the like can also be prevented from being lowered. The thicknesses of the resin layers (a) each are preferably 45 μm or less, more preferably 40 μm or less, and further preferably 30 μm or less.

The thickness of the resin layer (b) is not particularly limited, and is preferably 10 μm or more. In the case where the thickness thereof is the lower limit value or more, the laser printability and the mechanical strength can be easily enhanced. The thickness of the resin layer (b) is more preferably 20 μm or more, further preferably 30 μm or more, still further preferably 40 μm or more, and particularly preferably 50 μm or more.

The thickness of the resin layer (b) is not particularly limited, and is preferably 200 μm or less. In the case where the thickness of the resin layer (b) is the upper limit value or less, the laser printing excellent in color development can be achieved even though the thickness of the laminate is increased beyond necessity. The thickness of the resin layer (b) is preferably 180 m or less, more preferably 160 μm or less, further preferably 140 μm or less, and particularly preferably 120 μm or less.

The thickness of the sublimation thermal transfer image receiving layer (c) is not particularly limited, and is preferably 0.5 μm or more, and more preferably 1 μm or more, and is preferably 20 μm or less, more preferably 10 μm or less, and further preferably 8 μm or less.

The laminate of the present invention is in the form of a sheet, and the total thickness thereof is preferably 15 μm or more, more preferably 30 μm or more, and further preferably 40 μm or more, and is preferably 300 μm or less, more preferably 250 μm or less, further preferably 200 μm or less, and still further preferably 160 μm or less.

In the laminate, the ratio of the thickness of the resin layer (b) with respect to the thickness of the resin layer (a) (b/a) is preferably 1 or more, more preferably 1.5 or more, further preferably 2 or more, still further preferably 2.5 or more, and particularly preferably 3 or more, and is preferably 10 or less, more preferably 9 or less, further preferably 8 or less, still further preferably 7 or less, and particularly preferably 6 or less.

In the case where the ratio of the thicknesses of the resin layer (b) and the resin layer (a) is in the range, the capabilities can be easily enhanced while improving the laser printability.

(Surface Characteristics)

The laminate of the present invention preferably has surface characteristics having certain roughness imparted to at least one surface thereof. Specifically, at least one surface of the laminate of the present invention preferably has a maximum height roughness (Rz) of 1 μm or more and 20 μm or less. At least one surface of the laminate of the present invention preferably has an arithmetic average roughness (Ra) of 0.1 μm or more and 5 μm or less.

In the case where the maximum height roughness (Rz) or the arithmetic average roughness (Ra) of the surface of the laminate is the lower limit value or more, the laminate becomes slippy due to the appropriate roughness thereof, and the handleability, for example, in producing a card or a passport can be improved. Furthermore, for example, in the case where the laminates are stacked in storing after processing, the surface of the laminate having been printed, i.e., the printed surface, can be prevented from adhering to another member (i.e., so-called blocking), and the problems including peel-off of the printed surface can be suppressed from occurring.

In the case where the maximum height roughness (Rz) or the arithmetic average roughness (Ra) of the surface of the laminate is the upper limit value or less, the fixing of print on the surface of the laminate can be facilitated by suppressing the roughness to a certain degree, and thereby the printability on the surface of the laminate can be enhanced. Furthermore, the collapsing amount of the surface unevenness in hot pressing can be suppressed to reduce the decrement amount of the thickness in hot pressing, thereby facilitating the thickness design of the configuration of a card. At least one surface of the laminate more preferably has Rz and Ra, both of which are in the aforementioned ranges.

At least one surface of the laminate preferably has a kurtosis (Rku) of 3.0 or less. The kurtosis (Rku) means the fourth power mean of Z(x) in the reference length nondimensionalized by fourth power of the root mean square height Rq, which is the peakedness as an index of the surface sharpness. Accordingly, the decrease in kurtosis (Rku) facilitates the fixing of print through adaptation of the print on the surface of the laminate. At least one surface of the laminate preferably has at least one of Rz and Ra within the aforementioned ranges, and more preferably has both Rz and Ra within the aforementioned ranges, while the kurtosis (Rku) is 3.0 or less.

The maximum height roughness (Rz) is more preferably 3 μm or more, and further preferably 5 μm or more, and is preferably 15 μm or less, and further preferably 12 μm or less.

The arithmetic average roughness (Ra) is more preferably 0.3 μm or more, and further preferably 0.5 μm or more, and is preferably 3.5 μm or less, and further preferably 2.5 μm or less.

The kurtosis (Rku) is more preferably 2.9 or less, and further preferably 2.8 or less. The lower limit of the kurtosis (Rku) is not particularly limited, and may be, for example, 1 or more, and preferably 1.2 or more.

In the present invention, at least one surface of the laminate preferably has at least one of a root mean square height (Rq), a maximum peak height (Rp), a maximum valley depth (Rv), a maximum section height (Rt), or a skewness (Rsk) within the following prescribed ranges. The laminate having the surface characteristics shown below has a surface having appropriate slippage, improving the handleability, and the print can be easily fixed to the surface of the laminate, enhancing the printability of the surface of the laminate.

Specifically, at least one surface of the laminate preferably has a root mean square height (Rq) of 0.1 μm or more, more preferably 0.6 μm or more, and further preferably 0.8 μm or more, and is preferably 6.5 μm or less, more preferably 4 μm or less, and further preferably 3 μm or less.

At least one surface of the laminate preferably has a maximum peak height (Rp) of 0.5 μm or more, more preferably 1 μm or more, and further preferably 1.5 μm or more, and is preferably 10 μm or less, more preferably 7.5 μm or less, and further preferably 5 μm or less.

At least one surface of the laminate preferably has a maximum valley depth (Rv) of 0.5 μm or more, more preferably 1.5 μm or more, and further preferably 2.5 μm or more, and is preferably 10 μm or less, more preferably 8.5 μm or less, and further preferably 7.5 μm or less.

At least one surface of the laminate preferably has a maximum section height (Rt) of 1 μm or more, more preferably 3 μm or more, and further preferably 5 μm or more, and is preferably 25 μm or less, more preferably 20 μm or less, and further preferably 15 μm or less.

At least one surface of the laminate preferably has a skewness (Rsk) of -3 or more, more preferably -2 or more, and further preferably -1 or more, and is preferably 3 or less, more preferably 2 or less, and further preferably 1 or less.

The skewness (Rsk) means the cubic mean of Z(x) in the reference length nondimensionalized by cube of the root mean square height Rq, which shows the symmetry of peaks and valleys with the mean line as center, i.e., the strain intensity.

In other words, a positive value of Rsk, which is a parameter of the height distribution, suggests that the height distribution deviates downward with respect to the mean line, and the peaks are sharper, and a negative value thereof suggests that the height distribution deviates upward with respect to the mean line, and the peaks are duller.

At least one surface of the laminate that has the particular surface characteristics shown above is preferably constituted by the resin layer (a) or the sublimation thermal transfer image receiving layer (c), and more preferably constituted by the resin layer (a). At least one surface of the laminate that is constituted by the resin layer (a) containing

the particular polycarbonate resin (A) facilitates the achievement of the aforementioned surface characteristics.

At least one surface of the laminate may be subjected to a surface treatment, such as a matting treatment, for providing the surface characteristics shown above. While the method of the surface treatment is not particularly limited, it is possible that a mirror surface sheet is produced, and then the surface thereof is matted with a matting roll or the like, and it is also possible that the casting roll described later is replaced by a matting roll or a roll having an appropriately regulated surface roughness, and the surface treatment, such as the matting treatment, is performed while forming the sheet. Furthermore, various treatments, for example, a transfer treatment, such as embossing roll transfer, embossing belt transfer, and embossing film transfer, a sandblasting treatment, a shotblasting treatment, an etching treatment, an engraving treatment, and a surface crystallization treatment, may be used.

Among these, a method of casting the molten resin of the film on a roll, such as a casting roll, so as to regulate to the target roughness is preferred since the surface roughness can be easily regulated continuously and uniformly while extruding the molten resin into the film form. In this case, the surface roughness of the laminate can be regulated by regulating the surface roughness, such as the arithmetic average roughness of the casting roll.

It suffices that the one surface of the laminate has the particular surface characteristics described above, and both surfaces thereof each may have the particular surface characteristics described above.

In the present invention, the resin layer (b) contains a resin other than the polycarbonate resin (A) (which may be hereinafter referred to as a resin (B1) for convenience). While the foregoing description refers to embodiments in which the resin layer (b) in the laminate contains the polycarbonate resin (B) as the resin (B1), the resin layer (b) may not contain the polycarbonate resin (B) as the resin (B1) other than the polycarbonate resin (A). Therefore, the resin (B1) contained in the resin layer (b) may be constituted by a resin other than a polycarbonate resin.

In the present invention, even in the case where a polycarbonate resin is not used in the resin layer (b), the use of the prescribed polycarbonate resin (A) in the resin layer (a) can improve the capabilities, such as the heat resistance, the scratch resistance, the hydrolysis resistance, the solvent resistance, and the low temperature fusion bondability. Furthermore, the laser markability and the like can be improved.

Specific examples of the resin other than a polycarbonate resin used as the resin (B1) include a polyester resin, a polyolefin resin, an acrylic resin, a polystyrene resin, a polyamide resin, a polyvinyl chloride resin, a polyvinylidene chloride resin, a polyvinyl alcohol resin, an ethylene-vinyl alcohol resin, a polycycloolefin resin, an ethylene-vinyl acetate copolymer resin, an ethylene-(meth)acrylate copolymer resin, a polyphenylene ether resin, a polyacetal resin, an acrylonitrile-butadiene-styrene copolymer resin, a polyaryl ether ketone resin, a polyimide resin, a polyphenylene sulfide resin, a polyarylate resin, a polysulfone resin, a polyether sulfone resin, and a fluorine resin. One kind of the resins may be used alone, or two or more kinds thereof may be used in combination.

In the case where a resin other than a polycarbonate resin is used as the resin (B1) other than the polycarbonate resin (A) in the resin layer (b), the configuration other than the resin used in the resin layer (b) in the laminate are as described above.

(Size of Laminate)

The size of the laminate of the present invention may vary depending on the purpose, and for example, in the case of using as a passport, the area of the laminate is preferably 400 $cm^2$ or less, more preferably 350 $cm^2$ or less, further preferably 300 $cm^2$ or less, still further preferably 250 $cm^2$ or less, still more further preferably 200 $cm^2$ or less, and particularly preferably 150 $cm^2$ or less, and is preferably 50 $cm^2$ or more, and more preferably 80 $cm^2$ or more.

In the case of using as a passport, for example, the shape thereof is preferably a quadrilateral shape, such as a rectangular shape, and the length of one edge thereof is preferably 20 cm or less, more preferably 18 cm or less, further preferably 16 cm or less, and particularly preferably 14 cm or less, and is preferably 10 cm or more, and more preferably 11 cm or more. The length of the other edge thereof is preferably 15 cm or less, more preferably 13 cm or less, further preferably 11 cm or less, and still further preferably 10 cm or less, and is preferably 7 cm or more, and more preferably 8 cm or more. The laminate that has the size and the shape described above can be favorably applied to a passport, particularly to an electronic passport, and still particularly to a data page thereof.

The area of the laminate, for example, in the case of using as a card, is preferably 200 $cm^2$ or less, more preferably 150 $cm^2$ or less, further preferably 100 $cm^2$ or less, still further preferably 80 $cm^2$ or less, and particularly preferably 60 $cm^2$ or less, and is preferably 20 $cm^2$ or more, and more preferably 30 $cm^2$ or more.

In the case of using as a card, for example, the shape thereof is preferably a quadrilateral shape, such as a rectangular shape, and the length of one edge thereof is preferably 17 cm or less, more preferably 15 cm or less, further preferably 13 cm or less, and still further preferably 11 cm or less, and is preferably 6 cm or more, and more preferably 7.5 cm or more. The length of the other edge thereof is preferably 14 cm or less, more preferably 12 cm or less, further preferably 10 cm or less, and still further preferably 8 cm or less, and is preferably 4 cm or more, and more preferably 4.5 cm or more.

The laminate that has the size and the shape described above can be favorably applied to a card.

<Production Method of Laminate>

Examples of the production method of the laminate include a method of laminating the resins or the resin compositions constituting the layers through melt extrusion molding to the prescribed thicknesses (i.e., a co-extrusion method), a method of forming the layers into films having the prescribed thicknesses, and then laminating the films, and a method of forming multiple layers through melt extrusion molding, on which a film having been separately formed is laminated. Among these, the lamination through melt extrusion molding is preferred from the standpoint of the productivity and the cost.

Specifically, the resins or the resin compositions constituting the layers are prepared, which are pelletized depending on necessity, and then placed in hoppers of a multilayer T-die extruder having T-dies connected to each other. The resins or the resin compositions are melted at a temperature in a range of 200 to 300°C and then melt extrusion molded through the multilayer T-die, and then cooled and fixed with a cooling roll (casting roll) or the like. The laminate (laminated sheet) can be formed in this manner. The production method of the laminate of the present invention is not limited to the aforementioned method, and the laminate may be produced by any method.

<Use Method of Laminate>

The laminate of the present invention can be favorably used as a sheet for laser marking as described above. The laminate of the present invention can also be used as a passport or various cards, such as an IC card, a magnetic card, a driver license certificate, a residence card, a qualification certificate, an employee identification certificate, a student identification certificate, an individual number card, a seal registration certificate, a vehicle inspection certificate, a tag card, a prepaid card, a bank card, a credit card, an electronic toll collection card, a SIM card, and a BS conditional access system card. In the various cards and the passport, the laminate of the present invention can be used as a recording layer, on which various information is recorded.

It is preferred that the card and the passport each include the laminate and a film fusion bonded to the laminate, and is marked through laser marking. The card or the passport can be produced, for example, by the following manner.

Specifically, the laminate is stacked on an additional film and fusion bonded thereto through hot press molding, lamination molding, or the like, so as to provide a laminate for a passport or a card (which may be hereinafter referred to as a secondary molded article). In producing the secondary molded article, two or more plies of one or both of the laminate and the additional film can be used and stacked. Subsequently, the secondary molded article, preferably, the part of the secondary molded article constituted by the laminate is irradiated with laser light to perform laser marking, so as to record a personal name, a symbol, a letter, a photograph, and the like, resulting in a passport, an electronic passport, or a card having personal information and the like printed thereon.

The additional film may be a resin film, and examples thereof include a core sheet described later, and a resin film for forming a protective layer. The additional film may be a hinge sheet or an inlet sheet. For example, the secondary molded article may be punched out before laser marking, so as to processed into a size suitable for a card or a passport.

(Card)

For example, the card may include a core sheet in addition to the laminate, and the laminate of the present invention may be laminated on one or both surfaces of the core sheet. The card may include a protective layer, and the protective layer formed of a resin film or the like may be laminated on the surface of the laminate for protecting the laminate.

The card preferably includes the laminates of the present invention laminated on both surfaces of a core sheet. Specifically, a card 20A including laminate 1/core sheet 2/laminate 1 shown in Fig. 1(a), or a card 20B including protective layer 4/laminate 1/core sheet 2/laminate 1/protective layer 4 shown in Fig. 1(b) is preferred.

The laminate may have a sublimation thermal transfer image receiving layer (c) as described above, and the sublimation thermal transfer image receiving layer (c) may be provided on the front surface becoming the viewing side, i.e., the opposite side of the core sheet. This is the same as in the passport described later.

The core sheet is preferably a resin sheet using a polycarbonate resin, a polyester resin, a mixture thereof, or the like as a resin material, and is preferably a colored sheet containing a colorant appropriately. The thickness of the core sheet is, for example, approximately 400 to 700 μm.

Examples of the colorant used in the core sheet include titanium oxide, barium oxide, and zinc oxide as a white pigment, iron oxide and titanium yellow as a yellow pigment, iron oxide as a red pigment, and cobalt blue and ultramarine blue as a blue pigment. A dye, such as a white dye, may also be used. A colorant providing pale color or weak color is preferred for enhancing the contrast. Among the colorants described above, a white dye and a white pigment are more preferred since a strong contrast can be provided.

The protective layer suppresses so-called "blister", i.e., foaming of the laser printed part through irradiation of laser light. The resin used in the protective layer is not particularly limited, and examples of the resin include a polycarbonate resin, a polyester resin, and a mixture thereof.

(Passport)

The passport, particularly the electronic passport, may include a hinge sheet and core sheets provided on both surfaces of the hinge sheet, in addition to the laminate, and the laminate of the present invention may be laminated on the surface of the core sheet. The passport may include a protective layer, and the protective layer formed of a resin film or the like may be further laminated on the surface of the laminate for protecting the laminate. Specifically, a passport 10A including laminate 1/core sheet 2/hinge sheet 3/core sheet 2/laminate 1 shown in Fig. 2(a), or a passport 10B including protective layer 4/laminate 1/core sheet 2/hinge sheet 3/core sheet 2/laminate 1/protective layer 4 shown in Fig. 2(b) is preferred.
The passport may also include a so-called inlet sheet, i.e., a sheet having arranged thereon recording media, such as IC chips, recording various information. The inlet sheet may be provided, for example, between the hinge sheet and the core sheet.
The hinge sheet has a function of retaining the recording layer, the core sheet, the inlet sheet, and the like, and firmly binding integrally the front cover of the passport and other sheets including a visa sheet and the like. Therefore, the hinge sheet preferably has firm fusion bondability, appropriate flexibility, heat resistance in the fusion bonding process, and the like.
The hinge sheet used may be a known one, may be a resin sheet formed of a thermoplastic resin or a thermoplastic elastomer, such as a thermoplastic polyester resin, a thermoplastic polyester elastomer, a thermoplastic polyamide resin, a thermoplastic polyamide elastomer, a thermoplastic polyurethane resin, and a thermoplastic polyurethane elastomer, may be constituted by a woven fabric, a knitted fabric, a nonwoven fabric, or the like, and may be a composite material including a woven fabric, a knitted fabric, or a nonwoven fabric, and a thermoplastic resin, a thermoplastic elastomer, or the like. The core sheet in the passport may be the same as described above except that the thickness thereof is preferably 50 to 200 μm. The protective layer in the passport may be the same as described above.

Examples

Examples and Comparative Examples will be shown below, but the present invention is not limited thereby.
The evaluation methods and the measurement methods were as follows.

Glass Transition Temperature (Heat Resistance)

The measurement of the temperature dispersion of the dynamic viscoelasticity was preformed with reference to JIS K7244-4:1999 at a strain of 0.07%, a frequency of 1 Hz, and a temperature rising rate of 3°C/min with a viscoelastic spectrometer "DVA-200" (available from IT Measurement Control Co., Ltd.). The temperature showing the primary dispersion peak of the loss tangent (tanδ) was designated as the glass transition temperature. In the case where there were two peaks, the peak on the low temperature side was designated as the glass transition temperature.
The laminates of Examples and Comparative Examples each were measured for the glass transition temperature by the aforementioned method for evaluating the heat resistance. A higher glass transition temperature of the laminate shows better heat resistance thereof.

(2) Hot Press Process Test

The laminated sheets obtained in each of Examples and Comparative Examples were fusion bonded for 20 mm in sheet width × 40 mm in length (fusion bonding length: 10 mm, non-fusion bonding length: 30 mm) under condition of a heating time of 5 seconds and subsequent cooling at 40°C for 5 seconds with an electric sealer "Impulse Sealer OPL-200-10" (available from Fuji Impulse Co., Ltd.). Thereafter, a 180° peeling test was performed by holding the non-fusion bonded part with the hand, and it was confirmed as to whether the laminated sheet was broken. The heating temperature was increased by 10°C, and the first temperature at which the material was broken (breaking temperature) is shown in Table 1. The breaking temperature is a temperature at which the laminated sheet is appropriately fusion bonded, and a lower value thereof means better low temperature fusion bondability.

(3) Flexural Test after Wet Heat Test

The laminated sheet obtained in each of Examples and Comparative Examples was stored under condition of 80°C and 90%RH for 40 days in a constant temperature and humidity chamber "PR-1KPH" (available from Espec Corporation). Thereafter, under a room temperature environment, the laminated sheet was cut into a size of 40 mm ×

40 mm and then flexed for evaluating the hydrolysis resistance by the following evaluation standard.

OK: The sheet was not cracked.
NG: The sheet was cracked.

(4) Pencil Hardness

The surface of the laminated sheet obtained in each of Examples and Comparative Examples was flattened by pressing with a hot press machine (hot press temperature: temperature shown in Table 2, time: 300 seconds, sheet pressure: 1.4 MPa). On the resulting flattened surface of the laminated sheet, a line was drawn under a line distance of 1 cm and a load of 500 g with a pencil scratch hardness tester (available from Yasuda Seiki Seisakusho, Ltd.), and after the test, the scratch on the surface of the sheet was visually conformed for evaluation. The maximum hardness where no scratch occurs is shown in Table 1. A higher maximum hardness means higher scratch resistance. A case where a scratch was confirmed on the surface of the sheet at 4B was evaluated as less than 4B.

(5) Solvent Immersion Test

A piece of the sheet was immersed in a solvent placed in a dish for 1 minute under a room temperature environment, and the appearance thereof was visually confirmed and evaluated by the following evaluation standard. The test was performed by using ethyl acetate and toluene as the solvent.

A: Level where the piece was not changed, or the matte on the surface disappeared.
B: The sheet was slightly whitened.
B-: The sheet underwent some cracks.
C: The sheet was completely whitened.
D: The sheet was dissolved.

(6) Laser Printability

Laser printing was performed on a card produced by using the laminated sheet by 51 $\mu$m/step $\times$ 50% with "CLM-20", available from Nidec Copal Corporation, and the reflection density was measured with "eXact" available from X-Rite, Inc. The laser printability was evaluated based on the reflection density by the following evaluation standard.

The configurations of the cards of Examples and Comparative Examples are shown in Table 2. The card was produced in such a manner that the laminated sheet and the core sheet (mass ratio of (base resin shown in Table 2)/(titanium oxide) = 88/12) were stacked in the order of laminated sheet/core sheet/core sheet/laminated sheet, and then pressed with a hot press machine (hot press temperature: temperature shown in Table 2, time: 300 seconds, sheet pressure: 1.4 MPa) to provide a laminate, which was then punched out to a card shape (54 cm $\times$ 86 cm).

A: The reflection density was 1.1 or more.
B: The reflection density was 0.7 or more and less than 1.1.
C: The reflection density was less than 0.7.

(7) Surface Characteristics

The surface characteristics of the laminated sheets of Examples and Comparative Examples were measured according to ISO 1997 with a surface roughness meter "Surfcom 130A" (available from Tokyo Seimitsu Co., Ltd.) at a measurement speed of 0.6 mm/s, a measurement length of 5 mm, with a cutoff value of 2.5 mm, using a Gaussian filter. In Examples and Comparative Examples, the surface of the laminate on the side in contact with the casting roll was measured for the surface characteristics.

(8) Amount of Laser Color Developer per Unit Area

The amount of the laser color developer per unit area was obtained according to the following expression.

$$\text{Amount of laser color developer per unit area } (\mu g/cm^2) = (\text{specific gravity } (\mu g/cm^3) \text{ of laser color developer}) \times (\text{mass proportion } (\%) \text{ of laser color developer in laser color developer-containing layer (resin layer (b))}) \times (\text{thickness (cm) of laser color developer-containing layer})$$

For example, the amount thereof can be calculated for Example 1.

$$8.9 \times 10^6 \text{ (specific gravity)} \times 0.0026 \text{ (mass proportion)} \times 50 \times (4/6) \times 10^{-4} \text{ (thickness)} = 77$$

The materials used in Examples and Comparative Examples were as follows.

PETG: Amorphous aromatic polyester-based resin (polyester resin obtained by replacing 30% by mol of ethylene glycol in polyethylene terephthalate by 1,4-cyclohexanedimethanol), glass transition temperature: 84°C
PC1: Bisphenol A-based homopolycarbonate (interfacial polymerization method), mass average molecular weight: ca. 53,000, glass transition temperature: 154°C
PC2: Bisphenol A-based homopolycarbonate (melt polymerization method), mass average molecular weight: ca. 72,000, glass transition temperature: 160°C
PC3: Bisphenol A-based homopolycarbonate (interfacial polymerization method), mass average molecular weight: ca. 72,000, glass transition temperature: 159°C
ISP: Polycarbonate resin obtained by the melt polymerization method using isosorbide and 1,4-cyclohexanedimethanol as the dihydroxy compound at a ratio of (structural unit derived from isosorbide)/(structural unit derived from 1,4-cyclohexanedimethanol) = 50/50 (% by mol), glass transition temperature: 108°C
Impact resistance improver: Core-shell type elastomer, "Metablen E-870A", available from Mitsubishi Chemical Corporation
Antioxidant: Combination use of phenol-based antioxidant (dibutylhydroxytoluene (BHT)) and phosphorus-based antioxidant (tristearyl phosphite) at mass ratio of 1/1
Laser color developer: Bismuth-neodymium-based metal oxide (average particle diameter: 0.8 μm, specific gravity: 8.9 $g/cm^3$)

[Example 1]

As the resin layers (a), ISP was extruded at 230°C with an extruder from a two-kind three-layer multimanifold die as the first layer and the third layer (outer layers). As the resin layer (b), a composition obtained by dry-blending according to the prescribed formulation shown in Table 1 was extruded at 240°C with the extruder from the die shown above as the second layer (intermediate layer). The extruded film was quenched with a casting roll at approximately 105°C, so as to provide a laminate (laminated sheet) including resin layer (a)/resin layer (b)/resin layer (a) having a thickness ratio of 1/4/1 having a total thickness of 50 μm.

[Example 2]

The same procedure as in Example 1 was performed except that the total thickness of the laminated sheet was regulated to 100 μm.

[Examples 3 and 4]

The same procedure as in Example 1 was performed except that the kind of the resin and the mixing amounts of the components in resin layer (b) were changed as shown in Table 1, and extruded as the second layer (intermediate layer) at 260°C, and the extruded film was quenched with a casting roll at approximately 90°C.

[Examples 5 and 6]

The same procedure as in Examples 3 and 4 was performed except that as the resin layer (a), 11 parts by mass of the impact resistance improver was dry-blended with 100 parts by mass of ISP, which were kneaded and extruded with an extruder as the first layer and the third layer (outer layers).

[Comparative Example 1]

The same procedure as in Example 1 was performed except that the kind of the resin in the resin layer (a) and the formulation of the resin layer (b) were changed as shown in Table 1, and the extruded film was quenched with a casting roll at approximately 80°C to regulate the thickness ratio of resin layer (a)/resin layer (b)/resin layer (a) to 1/2/1.

[Comparative Example 2]

The same procedure as in Comparative Example 1 was performed except that the total thickness of the laminated sheet was regulated to 100 μm.

[Comparative Examples 3 and 4]

The same procedure as in Examples 1 and 2 was performed except that the kind of the resin in the resin layer (a) was changed, and extruded at 235°C as the first layer and the third layer (outer layers), and the extruded film was quenched with a casting roll at approximately 120°C.

[Comparative Example 5]

The same procedure as in Example 1 was performed except that the kinds of the resins in the resin layers (a) and (b) and the formulation of the resin layer (b) were changed as shown in Table 1, and extruded at 250°C as the first layer and the third layer (outer layers), and extruded at 230°C as the second layer (intermediate layer).

Table 1

| | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| Thickness ($\mu$m) | Total thickness | 50 | 100 | 50 | 50 | 50 | 50 | 50 | 100 | 50 | 100 | 50 |
| | Layer ratio: layer (a)/layer (b) /layer (a) | 1/4/1 | 1/4/1 | 1/4/1 | 1/4/1 | 1/4/1 | 1/4/1 | 1/2/1 | 1/2/1 | 1/4/1 | 1/4/1 | 1/4/1 |
| Resin layer (a) (part by mass) | PETG | | | | | | | * | * | | | |
| | PC1 | | | | | | | | | * | * | * |
| | ISP | * | * | * | * | * (100) | * (100) | | | | | |
| | Impact resistance improver | | | | | 11 | 11 | | | | | |
| Resin layer (b) (part by mass) | PETG | | | | | | | | | | | |
| | PC1 | 100 | 100 | | | | | | | 100 | 100 | |
| | PC2 | | | | | | | 100 | 100 | | | |
| | PC3 | | | 100 | 100 | 100 | 100 | | | | | |
| | ISP | | | | | | | | | | | 100 |
| | Antioxidant | | | | | | | 0.24 | 0.24 | | | |
| | Laser color developer | 0.26 | 0.26 | 0.10 | 0.15 | 0.19 | 0.23 | 0.05 | 0.05 | 0.26 | 0.26 | 0.26 |
| Amount of laser color developer per unit area ($\mu g/cm^2$) | | 77 | 154 | 29 | 44 | 55 | 68 | 11 | 22 | 77 | 154 | 77 |
| Glass transition temperature (°C) | | 100 | 102 | 102 | 102 | 100 | 100 | 78 | 78 | 154 | 154 | 102 |
| Hot press test (°C) | | 140 | 140 | 120 | 120 | 120 | 120 | 110 | 110 | 160 | 160 | 150 |
| Flexural test after wet heat test | | OK | OK | - | - | - | - | OK | NG | OK | OK | OK |
| Pencil hardness | | 2B | B | 3B | 3B | - | - | 4B | 4B | < 4B | 4B | < 4B |
| Solvent immersion test | Ethyl acetate | - | A | - | - | - | - | - | A | D | D | - |
| | Toluene | - | A | - | - | - | - | - | A | D | D | - |
| Laser printability | | A | A | B | A | A | A | B | B | A | A | C |

(continued)

| | | Example | | | | | | Comparative Example | | | | |
|---|---|---|---|---|---|---|---|---|---|---|---|---|
| | | 1 | 2 | 3 | 4 | 5 | 6 | 1 | 2 | 3 | 4 | 5 |
| Surface characteristics | Arithmetic average roughness Ra (μm) | 1.101 | 1.585 | 1.329 | 1.368 | 1.424 | 1.248 | 0.999 | 1.439 | 1.048 | 1.334 | 1.255 |
| | Root mean square height Rq (μm) | 1.322 | 1.946 | 1.800 | 1.753 | 1.873 | 1.582 | 1.371 | 1.841 | 1.351 | 1.735 | 1.648 |
| | Maximum height roughness Rz (μm) | 6.206 | 8.563 | 11.256 | 9.513 | 10.513 | 8.012 | 8.438 | 10.231 | 7.481 | 9.850 | 9.369 |
| | Maximum peak height Rp (μm) | 2.200 | 3.419 | 3.994 | 3.338 | 3.000 | 2.738 | 2.531 | 3.856 | 3.688 | 3.131 | 2.781 |
| | Maximum valley depth Rv (μm) | 4.006 | 5.144 | 7.263 | 6.175 | 7.513 | 5.275 | 5.906 | 6.375 | 3.794 | 6.719 | 6.588 |
| | Maximum section height Rt (μm) | 6.675 | 9.300 | 12.688 | 11.175 | 11.075 | 8.225 | 10.113 | 11.450 | 7.713 | 12.225 | 10.475 |
| | Skewness Rsk | -0.696 | -0.360 | -1.007 | -0.668 | -1.280 | -0.710 | -0.829 | -0.786 | 0.094 | -1.020 | -1.223 |
| | Kurtosis Rku | 2.757 | 2.703 | 4.860 | 3.847 | 4.697 | 3.639 | 4.997 | 3.626 | 3.286 | 4.646 | 5.105 |
| In Examples and Comparative Examples, the resin marked with * was used in the resin layer (a). | | | | | | | | | | | | |

Table 2

| | | Example 1 | Example 2 | Example 3 | Example 4 | Example 5 | Example 6 | Comparative Example 1 | Comparative Example 2 | Comparative Example 3 | Comparative Example 4 | Comparative Example 5 |
|---|---|---|---|---|---|---|---|---|---|---|---|---|
| Thickness of laminated sheet (µm) | | 50 | 100 | 50 | 50 | 50 | 50 | 50 | 100 | 50 | 100 | 50 |
| Core sheet | Base resin | ISP | ISP | ISP | ISP | ISP | ISP | PETG | PETG | PC3 | PC3 | ISP |
| | Thickness (µm) | 700 | 600 | 700 | 700 | 700 | 700 | 700 | 600 | 700 | 600 | 700 |
| Thickness of laminated sheet (µm) | | 50 | 100 | 50 | 50 | 50 | 50 | 50 | 100 | 50 | 100 | 50 |
| Hot press temperature (°C) | | 125 | 125 | 125 | 125 | 125 | 125 | 125 | 125 | 175 | 175 | 125 |

As described above, in Examples 1 and 2, the polycarbonate resin (A) having the structural unit (A1) was used in the resin layer (a), and the polycarbonate resin (B) other than the polycarbonate resin (A) contained in the resin layer (a) was used in the resin layer (b) containing the laser color developer, whereby the heat resistance, the scratch resistance, the hydrolysis resistance, the solvent resistance, and the low temperature fusion bondability were improved in a well balanced manner. The laser printability was also excellent. In Examples 3 to 6, it can be expected that the same effects are also obtained.

On the other hand, in Comparative Examples 1 and 2, the amorphous aromatic polyester-based resin was used instead of the polycarbonate resin (A) in the resin layer (a), whereby the heat resistance was poor due to the low glass transition temperature, and the scratch resistance was not improved due to the low pencil hardness, although the low temperature fusion bondability and the solvent resistance were improved. Furthermore, as shown in Comparative Example 2, no good result was obtained in the flexural test after the wet heat test when the thickness of the laminate was increased. It is considered that this occurs since the use of the amorphous aromatic polyester-based resin lowers the hydrolysis resistance. It is considered that the elongation amount for following the flexure in Comparative Example 2 is necessarily larger than Comparative Example 1 due to the large thickness of the laminate, whereby flexural cracks more likely occur to cause cracks due to hydrolysis deterioration.

In Comparative Examples 3 and 4, the bisphenol-based polycarbonate was used instead of the polycarbonate resin (A) in the resin layer (a), whereby the low temperature fusion bondability was poor due to the high fusion bonding temperature in the hot press test although the heat resistance and the hydrolysis resistance were improved. Furthermore, the scratch resistance and the solvent resistance were not improved.

As shown in Comparative Example 5, in the case where the polycarbonate resin (A) having the structural unit (A1) was used in the resin layer (b) containing the laser color developer, and the polycarbonate resin (B) other than the polycarbonate resin (A) was used in the resin layer (a), the heat resistance, the scratch resistance, the hydrolysis resistance, the solvent resistance, and the low temperature fusion bondability were not improved in a well balanced manner, and the laser printability was also deteriorated.

1: Laminate
2: Core sheet
3: Hinge sheet
4: Protective layer
20A, 20B: Card
10A, 10B: Passport

## Claims

1. A laminate comprising

   a resin layer (a) containing a polycarbonate resin (A) containing a structural unit (A1) derived from a dihydroxy compound having a moiety represented by the following formula (1) in a part of the structure thereof, and
   a resin layer (b) containing a polycarbonate resin (B) other than the polycarbonate resin (A) contained in the resin layer (a), and a laser color developer:

   $$-\left( CH_2-O \right)- \qquad (1)$$

   provided that a case where the moiety represented by the formula (1) is a part of $-CH_2-O-H$ is excluded.

2. The laminate according to claim 1, wherein the polycarbonate resin (A) contains the structural unit (A1) in an amount of 30% by mol or more in structural units derived from the dihydroxy compound.

3. The laminate according to claim 1 or 2, wherein the polycarbonate resin (A) contains the structural unit (A1) in an amount of 75% by mol or less in structural units derived from the dihydroxy compound.

4. The laminate according to any one of claims 1 to 3, wherein the resin layer (b) has a content of the laser color developer per unit area of 0.5 $\mu g/cm^2$ or more.

**5.** The laminate according to any one of claims 1 to 4, wherein the resin layer (b) has a content of the laser color developer per unit area of 350 $\mu g/cm^2$ or less.

**6.** The laminate according to any one of claims 1 to 5, wherein the laser color developer is a metal oxide.

**7.** The laminate according to claim 6, wherein the metal oxide is a bismuth-based metal oxide.

**8.** The laminate according to any one of claims 1 to 7, wherein the resin layer (a) has a thickness of 5 $\mu m$ or more.

**9.** The laminate according to any one of claims 1 to 8, wherein the laminate further comprises a sublimation thermal transfer image receiving layer (c) on at least one surface thereof.

**10.** The laminate according to any one of claims 1 to 9, wherein at least one surface of the laminate has a kurtosis (Rku) of 3.0 or less.

**11.** The laminate according to any one of claims 1 to 10, wherein at least one surface of the laminate has a maximum height roughness (Rz) of 1 $\mu m$ or more and 20 $\mu m$ or less.

**12.** The laminate according to any one of claims 1 to 11, wherein at least one surface of the laminate has an arithmetic average roughness (Ra) of 0.1 $\mu m$ or more and 5 $\mu m$ or less.

**13.** The laminate according to any one of claims 1 to 12, wherein the laminate is used as a card.

**14.** The laminate according to any one of claims 1 to 12, wherein the laminate is used as a passport.

**15.** A card comprising the laminate according to any one of claims 1 to 12.

**16.** A passport comprising the laminate according to any one of claims 1 to 12.

**17.** A method comprising using the laminate according to any one of claims 1 to 12 as a card or a passport.

**18.** The method according to claim 17, wherein the method comprises laser marking the laminate.

**19.** Use of the laminate according to any one of claims 1 to 12 as a card or a passport.

**20.** The use according to the claim 19, wherein the use comprises laser marking the laminate.

**21.** A laminate comprising

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer,
having an area of 400 $cm^2$ or less:

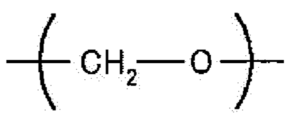
(1)

provided that a case where the moiety represented by the formula (1) is a part of $-CH_2-O-H$ is excluded.

**22.** A method of producing a laminate comprising at least laminating

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer, so as to provide a laminate:

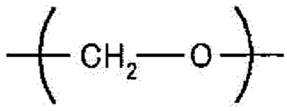

(1)

provided that a case where the moiety represented by the formula (1) is a part of $-CH_2-O-H$ is excluded.

**23.** A method of producing a card including a laminate including

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer,
the method of producing a card, at least comprising a step of stacking and fusion bonding the laminate and another film, and a step of laser marking through laser irradiation:

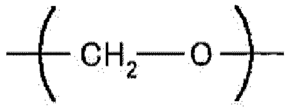

(1)

provided that a case where the moiety represented by the formula (1) is a part of $-CH_2-O-H$ is excluded.

**24.** A method of producing a passport including a laminate including

a resin layer (a) containing a polycarbonate resin (A) containing a structural unit (A1) derived from a dihydroxy compound having a moiety represented by the following formula (1) in a part of the structure thereof, and
a resin layer (b) containing a resin (B1) other than the polycarbonate resin (A) contained in the resin layer (a), and a laser color developer,
the method of producing a passport, at least comprising a step of laminating and fusion bonding the laminate and another film, and a step of laser marking through laser irradiation:

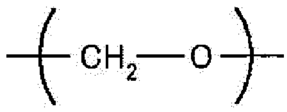

(1)

provided that a case where the moiety represented by the formula (1) is a part of $-CH_2-O-H$ is excluded.

Fig. 1

(a)

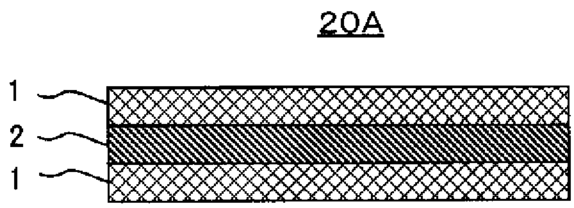


(b)

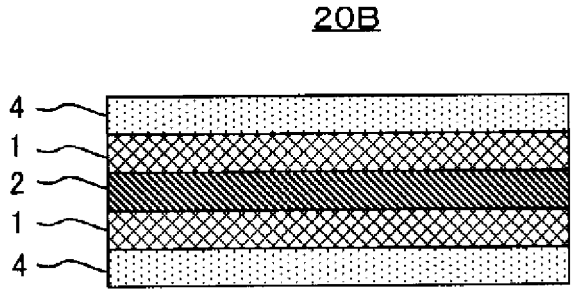

Fig. 2

(a)

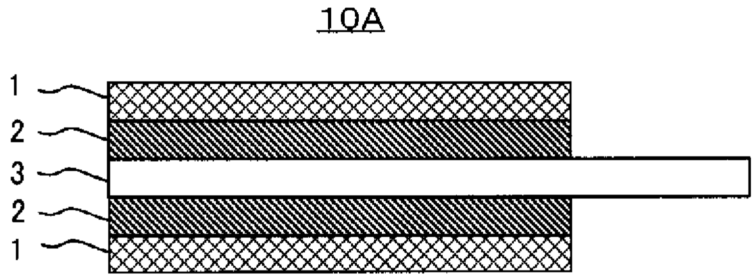


(b)

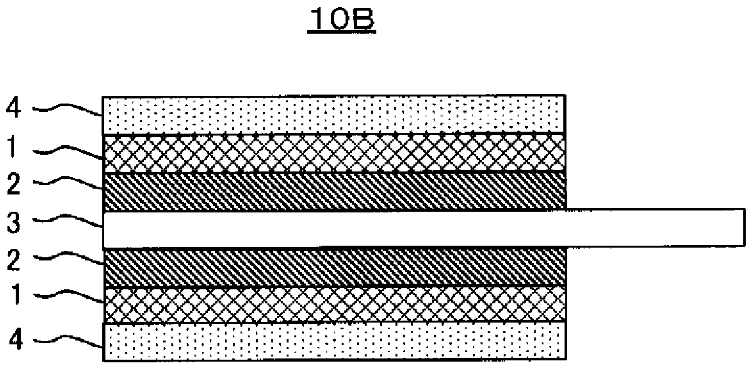

## INTERNATIONAL SEARCH REPORT

International application No. **PCT/JP2022/008398**

**A. CLASSIFICATION OF SUBJECT MATTER**

***B32B 27/36***(2006.01)i; ***B42D 25/23***(2014.01)i; ***B42D 25/24***(2014.01)i
FI: B32B27/36 102; B42D25/24; B42D25/23

According to International Patent Classification (IPC) or to both national classification and IPC

**B. FIELDS SEARCHED**

Minimum documentation searched (classification system followed by classification symbols)

B32B1/00-43/00; B42D25/23; B42D25/24

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2018/163889 A1 (MITSUBISHI GAS CHEMICAL CO., INC.) 13 September 2018 (2018-09-13) paragraphs [0001], [0009], [0012], [0025], claims | 1-24 |
| Y | WO 2020/116209 A1 (MITSUBISHI CHEMICAL CORP.) 11 June 2020 (2020-06-11) paragraphs [0058], [0060], claims | 1-24 |
| Y | JP 2011-201304 A (MITSUBISHI CHEMICALS CORP.) 13 October 2011 (2011-10-13) claims | 1-24 |
| Y | JP 2011-156719 A (MITSUBISHI CHEMICALS CORP.) 18 August 2011 (2011-08-18) claims | 1-24 |
| Y | WO 2021/020269 A1 (MITSUBISHI CHEMICAL CORP.) 04 February 2021 (2021-02-04) paragraphs [0072]-[0081] | 9 |
| Y | JP 2019-25754 A (MITSUBISHI CHEMICAL CORP.) 21 February 2019 (2019-02-21) paragraphs [0049]-[0057] | 9 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **18 April 2022** | **10 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/008398**

**C. DOCUMENTS CONSIDERED TO BE RELEVANT**

| Category* | Citation of document, with indication, where appropriate, of the relevant passages | Relevant to claim No. |
|---|---|---|
| A | JP 2012-143872 A (MITSUBISHI CHEMICALS CORP.) 02 August 2012 (2012-08-02) entire text | 1-24 |

Form PCT/ISA/210 (second sheet) (January 2015)

**INTERNATIONAL SEARCH REPORT**
**Information on patent family members**

International application No.
**PCT/JP2022/008398**

| Patent document cited in search report | Publication date (day/month/year) | Patent family member(s) | Publication date (day/month/year) |
|---|---|---|---|
| WO 2018/163889 A1 | 13 September 2018 | US 2020/0016877 A1<br>paragraphs [0001], [0025], [0029]-[0032], [0050], [0051], claims<br>EP 3593996 A1<br>CN 110352133 A<br>TW 201843048 A | |
| WO 2020/116209 A1 | 11 June 2020 | US 2021/0317304 A1<br>paragraphs [0070], [0071], [0073], claims<br>TW 202028006 A | |
| JP 2011-201304 A | 13 October 2011 | (Family: none) | |
| JP 2011-156719 A | 18 August 2011 | (Family: none) | |
| WO 2021/020269 A1 | 04 February 2021 | (Family: none) | |
| JP 2019-25754 A | 21 February 2019 | (Family: none) | |
| JP 2012-143872 A | 02 August 2012 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013001087 A
- JP 2010194757 A
- WO 2004111106 A
- WO 2007148604 A